# EUROPEAN PATENT APPLICATION

(11) **EP 4 266 733 A1**
(43) Date of publication of application: **25.10.2023**
(21) Application number: 22742195.5
(22) Date of filing: 19.01.2022
(51) Int. Cl.: H04W 24/02

(54) **ACCESS NETWORK SYSTEM**

(30) Priority: 19.01.2021 CN 202110071823
(71) Applicant: Vivo Mobile Communication Co., Ltd., Dongguan, Guangdong 523863 (CN)
(72) Inventor: KANG, Yanchao, Dongguan, Guangdong 523863 (CN); YANG, Xiaodong, Dongguan, Guangdong 523863 (CN)
(74) Representative: Petraz, Gilberto Luigi
(86) International application number: PCT/CN2022/072791
(87) International publication number: WO 2022/156716

(57) **Abstract**

Embodiments of this application disclose a radio access network system, and the system includes a plurality of radio access network functions, where the plurality of radio access network functions are connected to each other through a radio access network SBA bus, and any one of the plurality of radio access network functions can call a service provided by another radio access network function through the radio access network SBA bus.

## Description

### CROSS-REFERENCE TO RELATED APPLICATION

The present invention claims priority to Chinese Patent Application No. 202110071823.3, filed with the China National Intellectual Property Administration on January 19, 2021 and entitled "RADIO ACCESS NETWORK SYSTEM", which is incorporated herein by reference in its entirety.

### TECHNICAL FIELD

This application pertains to the field of communication technologies, and in particular, to a radio access network system.

### BACKGROUND

Software defined network (Software Defined Network, SDN) and network functions virtualization (Network Functions Virtualization, NFV) are a major evolution trend in wireless mobile communication networks. At present, a service-based architecture (Service-based Architecture, SBA) has been partially realized on a core network side, while a traditional logical unit design and logical interface are still maintained on a radio access network (Radio Access Network, RAN) side, which is not conducive to a modular design concept of a radio network and is not conducive to rapid deployment and upgrade of a network service.

### SUMMARY

Embodiments of this application provide a radio access network system to solve the problem that the current radio access network is not conducive to a modular design concept of a radio network and is not conducive to rapid deployment and upgrade of a network service.

According to a first aspect, a radio access network system is provided, and the system includes a plurality of radio access network functions, where the plurality of radio access network functions are connected to each other through a radio access network service-based architecture (SBA) bus, and any one of the plurality of radio access network functions can call a service provided by another radio access network function through the radio access network SBA bus.

In the radio access network system provided in the embodiments of this application, hardware entities in the radio access network are divided into a plurality of radio access network functions, the plurality of radio access network functions are connected to each other through the radio access network SBA bus, and any one of the plurality of radio access network functions can call a service provided by another radio access network function through the radio access network SBA bus. The embodiments of this application are conducive to the modular design concept of the radio network; conducive to the rapid deployment and upgrade of the network service; and conducive to subsequent integration with the Internet technology (Internet Technology, IT) such as cloud computing technology and artificial intelligence (Artificial Intelligence, AI).

### BRIEF DESCRIPTION OF DRAWINGS

FIG. 1 is a schematic diagram of a structure of a radio access network system according to an embodiment of this application;
FIG. 2 is a schematic diagram of a structure of a radio access network system according to an embodiment of this application;
FIG. 3 is a schematic diagram of a structure of a radio access network system according to an embodiment of this application;
FIG. 4 is a schematic diagram of a connection relationship between a radio access network SBA bus and a core network SBA bus according to an embodiment of this application; and
FIG. 5 is a schematic diagram of a connection relationship between a radio access network SBA bus and a core network SBA bus according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

Terms "first", "second", and the like in the specification and the claims of this application are used to distinguish between similar objects, instead of describing a specific sequence or order. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

A 6-th generation (6-th Generation, 6G) communications system is described below as an example, and the term 6G is used in most of the descriptions, although these technologies can also be used in an application other than an application of the 6G system, for example, a 5G evolution system, a 7G system, and the like.

An embodiment of this application proposes a radio access network (Radio Access Network, RAN) service-based architecture (Service-based Architecture, SBA) system, and the system constitutes an RAN SBA domain which focuses on a control plane function of the RAN. The user plane control function of the RAN may or may not belong to a scope of the radio access network system. This embodiment of this application also provides an intercommunication solution between the RAN SBA domain and a core network (Core Network, CN) SBA domain. With reference to the accompanying drawings, the radio access network system provided in the embodiments of this application is described in detail by using specific embodiments and application scenarios thereof.

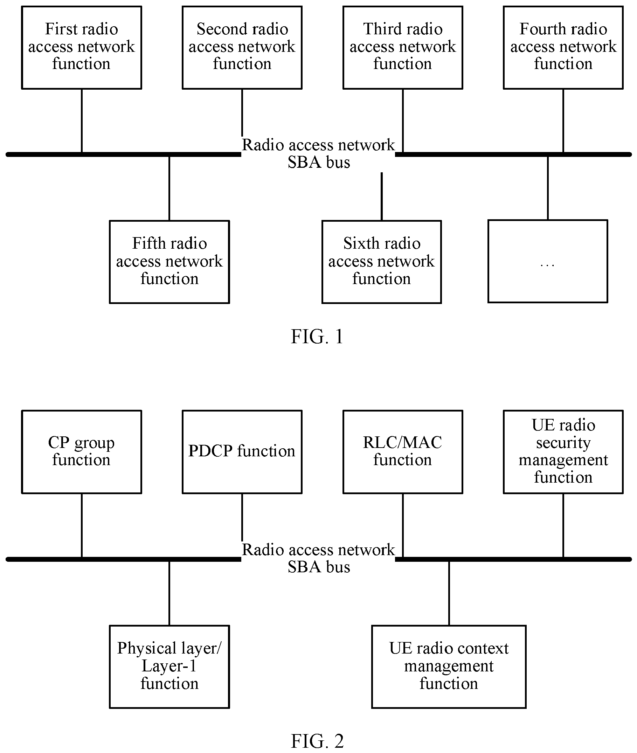

As shown in FIG. 1, an embodiment of this application provides a radio access network system, and the system includes a plurality of radio access network functions. FIG. 1 only schematically shows six radio access network functions, namely, the first radio access network function to the sixth radio access network function. In fact, a quantity of the plurality of radio access network functions in the radio access network system is not limited to this, and it can be more than six or less than six.

In this embodiment of this application, the plurality of radio access network functions in the radio access network system are connected to each other through a radio access network SBA bus (or referred to as an RAN SBA BUS or an RAN BUS), and any one of the plurality of radio access network functions can call a service provided by another radio access network function through the radio access network SBA bus.

Optionally, another network function, such as a core network function, accessing the radio access network SBA bus can also call a service provided by any one or more of the plurality of radio access network functions.

In this embodiment, the plurality of radio access network functions can provide, for UE, an access service, including, for example, a radio resource control (Radio Resource Control, RRC) configuration, paging terminal (i.e., UE), terminal mobility management, terminal RRC state management, a service related to terminal data transmission, and the like.

Optionally, the plurality of radio access network functions in the radio access network system can realize a packet data convergence protocol (Packet Data Convergence Protocol, PDCP) layer, radio link control (Radio Link Control, RLC), a media access control (Media Access Control, MAC) layer, a radio resource control (Radio Resource Control, RRC) layer, a physical (Physical) layer and other services that can be provided or functions that can be realized in related technologies. For example, a service that a second radio access network function can provide includes, for example, data encryption, data integrity protection, a service that ensures integrity of switching data, and the like, which is corresponding to a service that the PDCP layer can provide in related technologies.

In the radio access network system provided in the embodiments of this application, hardware entities in the radio access network are divided into a plurality of radio access network functions, the plurality of radio access network functions are connected to each other through the radio access network SBA bus, and any one of the plurality of radio access network functions can call a service provided by another radio access network function through the radio access network SBA bus. The embodiments of this application are conducive to the modular design concept of the radio network; conducive to the rapid deployment and upgrade of the network service; and conducive to subsequent integration with the Internet technology (Internet Technology, IT) such as cloud computing technology and artificial intelligence (Artificial Intelligence, AI).

The radio access network system provided in this embodiment of this application divides the radio access network system into a plurality of radio access network functions, which are realized by software respectively, and can be no longer limited to a hardware architecture, thus facilitating flexible deployment of the radio access network system.

Optionally, the plurality of radio access network functions included in the radio access network system according to this embodiment of this application may include at least two of the following items.
1) A first radio access network function, used to provide at least one of the following services: an RRC configuration, paging UE, mobility management, and RRC state management.
   A network function that can call the service provided by the first radio access network function includes, for example, an access and mobility management function (Access and Mobility Management Function, AMF).
2) A second radio access network function, used to provide at least one of the following services: data encryption, data integrity protection, and ensuring integrity of switching data.
   A network function that can call the service provided by the second radio access network function includes, for example, an RRC generating function entity, and the RRC generating function entity may belong to the first radio access network function. The RRC generating function entity can be used to generate an RRC message. For example, the RRC generating entity generates a broadcast message and then forwards the broadcast message to the second radio access network function for integrity protection.
3) A third radio access network function, used to provide at least one of the following services: segmentation or merging of data packets, and hybrid automatic repeat request (Hybrid Automatic Repeat Request, HARQ) transmission of data packets.
   A network function that can call the service provided by the third radio access network function includes, for example, the first radio access network function, for example, the first radio access network function transfers generated data to the third radio access network function for data segmentation, merging and other operations.
4) A fourth radio access network function, used to provide the following service: mapping of an air interface sending resource of data.
   A network function that can call the service provided by the fourth radio access network function includes, for example, the third radio access network function.
5) A fifth radio access network function, used to provide at least one of the following services: providing terminal radio context information; and establishing and updating the terminal radio context information.
   Generally, other radio access network functions in the radio access network system can call the service provided by the fifth radio access network function.
6) A sixth radio access network function, used to provide the following service: providing terminal radio security context.
   A network function that can call the service provided by the sixth radio access network function includes, for example, a radio access network function that needs to communicate with the terminal and performs security protection for communication signaling in the radio access network system.
7) A seventh radio access network function, used to provide at least one of the following services: a user plane control function, quality of service (Quality of Service, QoS) information reporting, and user plane information statistical feedback.

The plurality of radio access network functions mentioned in the foregoing two embodiments may further include an eighth radio access network function, used to provide the following service: ensuring that data is sent correctly.

In the forgoing embodiments, in a case that the plurality of radio access network functions include the seventh radio access network function, the seventh radio access network function may be connected to a user plane function (User Plane Function, UPF), and the user plane function can be used to transmit user plane data.

Optionally, in the radio access network system, at least one of the plurality of radio access network functions can also be connected to a core network SBA bus (CN SBA BUS). For example, the first radio access network function is connected to the core network SBA bus. In this embodiment, the core network SBA bus is also connected to a plurality of core network functions, including, for example, an AMF, a session management function (Session Management Function, SMF), and the like. Through connection between the radio access network functions and the core network SBA bus, it is convenient to realize intercommunication between the core network system and the radio access network system, so that the message of the terminal can be effectively transmitted.

In a case that the at least one of the plurality of radio access network functions is connected to the core network SBA bus, a radio access network function in the radio access network system can access the core network SBA bus when calling a service of a core network function, where the core network function is connected to the core network SBA bus.

Optionally, the radio access network SBA bus can also be connected to a core network function, where the core network function is connected to a core network SBA bus. For example, the core network function may be the AMF.

In a case that the radio access network SBA bus is connected to the core network function, the core network function can access the radio access network SBA bus when calling a service of a radio access network function in the radio access network system. Optionally, the core network function includes at least one of the following: an AMF; a network data analytics function (Network Data Analytics Function, NWDAF); an SMF; and an authentication server function (Authentication Server Function, AUSF).

In an example, the radio access network SBA bus is connected to the core network SBA bus through the NWDAF. For example, the NWDAF accesses both the core network SBA bus and the radio access network SBA bus.

Through connection between the radio access network SBA bus and the core network function, it is convenient to realize intercommunication between the core network system and the radio access network system, so that the message of the terminal can be effectively transmitted.

In order to describe in detail the radio access network system provided in the embodiments of this application, the following will use several specific embodiments for description.

### Embodiment 1

As shown in FIG. 2, FIG. 2 is a schematic diagram of a structure of a radio access network system according to an embodiment of this application. The radio access network system includes a plurality of radio access network functions, the plurality of radio access network functions are all connected to a radio access network SBA bus. For example, the plurality of radio access network functions include: a control panel group (Control Panel group, CP group for short) function, a PDCP function, an RLC/MAC function, a terminal radio security management function, a physical layer/layer-1 function, a terminal radio context management function, and the like. The radio access network system provided in this embodiment may not include an RAN user plane function.

In this embodiment, SBA interfaces of the plurality of radio access network functions can be realized based on a Restful interface, the Restful interface can be realized based on a hypertext transfer protocol (Hypertext Transfer Protocol, HTTP) 2.0; or the Restful interface can be a Restful enhanced port based on HTTP 3.0; or the SBA interface can be realized based on another SBA service interface protocol, for example, based on a packet forwarding control protocol (Packet Forwarding Control Protocol, PFCP).

The plurality of radio access network functions will be described in detail below.
1) The CP group function is corresponding to the first radio access network function in the foregoing embodiment, and an external service includes, for example, an RRC configuration, paging UE, mobility management, RRC state management, and the like.
   A functional entity that can call the service provided by the CP group function may be an AMF.
2) The PDCP function is corresponding to the second radio access network function in the foregoing embodiment, and an external service includes, for example, data encryption, data integrity protection, ensuring integrity of switching data, and the like.
   A network function that can call the service provided by the PDCP function includes, for example, an RRC generating function entity, and the RRC generating function entity may belong to the CP group function. The RRC generating function entity can be used to generate an RRC message. For example, the RRC generating entity generates a broadcast message and then forwards the broadcast message to the PDCP function for integrity protection.
3) The RLC/MAC function is corresponding to the third radio access network function in the foregoing embodiment, and an external service includes, for example, segmentation or merging of data packets, HARQ transmission of data packets, and the like.
   A functional entity that can call the service provided by the RLC/MAC function may have the CP group function, for example, the CP group function transfers generated data to the RLC/MAC function for data segmentation, merging and other operations.
4) The physical layer/layer-1 function is corresponding to the fourth radio access network function in the foregoing embodiment, and an external service includes, for example, mapping of an air interface sending resource of data.
   A functional entity that can call the service provided by the physical layer/layer-1 function may have the RLC/MAC function.
5) The terminal radio context management function (UE radio context management function) is corresponding to the fifth radio access network function in the foregoing embodiment, and an external service includes, for example, providing terminal radio context (radio context) to a radio access network function that requests a service; and establishing and updating the terminal radio context (radio context) based on terminal radio context provided by another radio access network function.
   A functional entity that can call the service provided by the terminal radio context management function is another radio access network function in all radio access network systems.
6) The terminal radio security management function (UE radio security management function) is corresponding to the sixth radio access network function in the foregoing embodiment, and an external service includes, for example, providing terminal radio security context. A network function that can call the service provided by the terminal radio security management function includes, for example, a radio access network function that needs to communicate with the terminal and performs security protection for communication signaling in the radio access network system.

The radio access network system provided in this embodiment may not include an RAN user plane function, and a control plane and a data plane in the radio access network are separated to realize flexible control of network traffic.

### Embodiment 2

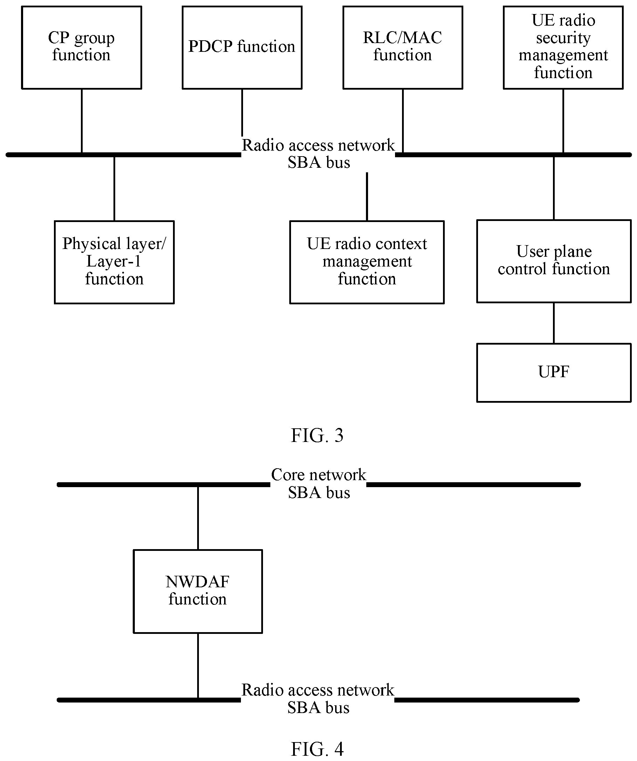

As shown in FIG. 3, FIG. 3 is a schematic diagram of a structure of a radio access network system according to an embodiment of this application. The radio access network system includes a plurality of radio access network functions, and the plurality of radio access network functions are all connected to a radio access network SBA bus. The plurality of radio access network functions include: a CP group function, a PDCP function, an RLC/MAC function, a terminal radio security management function, a physical layer/layer-1 function, and a terminal radio context management function. The radio access network system provided in this embodiment further includes an RAN user plane control function.

In this embodiment, SBA interfaces of the plurality of radio access network functions can be realized based on a Restful interface, the Restful interface can be realized based on a hypertext transfer protocol (Hypertext Transfer Protocol, HTTP) 2.0; or the Restful interface can be a Restful enhanced port based on HTTP 3.0; or the SBA interface can be realized based on another SBA service interface protocol, for example, based on a packet forwarding control protocol (Packet Forwarding Control Protocol, PFCP).

Compared with Embodiment 1, this embodiment adds a user plane control function (user plane Control function), and an external service includes, for example, ensuring that data is sent correctly. A network function that can call the service includes, for example, a UPF.

For description of other radio access network functions in this embodiment, please refer to the description of Embodiment 1, and to avoid repetition, details are not described herein again.

### Embodiment 3

This embodiment provides an intercommunication solution between a radio access network SBA bus and a core network (Core Network, CN) SBA bus.

In this embodiment, the radio access network SBA system (or referred to as a radio access network SBA domain) and the core network SBA system (or referred to as a core network SBA domain) are two independent SBA systems, that is, the radio access network SBA bus and the core network SBA bus are two independent buses. A principle for intercommunication between the two buses may include at least one of the following:
1) no matter a network function in the radio access network SBA system or the core network SBA system, as long as a service of a network function in the radio access network SBA system needs to be called, then the network function can access the radio access network SBA bus; and
2) no matter a network function in the radio access network SBA system or the core network SBA system, as long as a service of a network function in the core network SBA system needs to be called, then the network function can access the core network SBA bus.

In an example, as shown in FIG. 4, a network data analytics function (Network Data Analytics Function, NWDAF) network function accesses both the core network SBA bus and the radio access network SBA bus.

The NWDAF network function is a network element in the core network SBA system and mainly provides the following services: collecting state information from other network functions; and providing statistics to other network functions. Therefore, the NWDAF network function may request/provide a service to the network function of the core network SBA system as well as to the network function of the radio access network SBA system.

In other examples, the AMF can also access both the core network SBA bus and the radio access network SBA bus; and the SMF can also connect to the core network SBA bus and the radio access network SBA bus at the same time. Alternatively, an authentication server function (Authentication Server Function, AUSF) can also connect to both the core network SBA bus and the radio access network SBA bus.

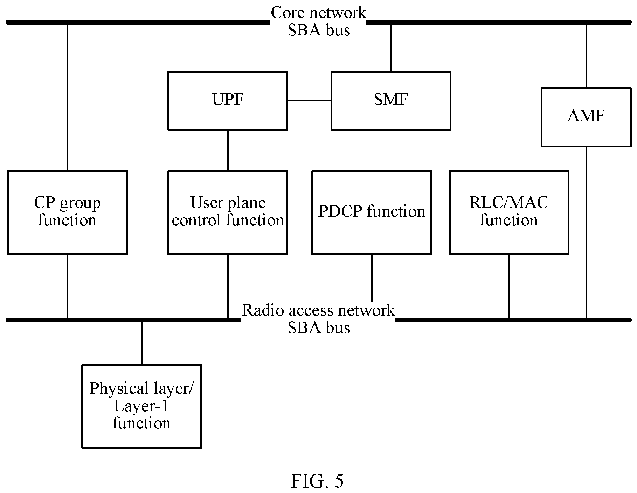

In another example, as shown in FIG. 5, a CP group function in the radio access network system can be connected to the core network SBA bus, and one function that can be realized includes, for example, the AMF calls the CP group function on the core network SBA bus, sends generated non-access stratum (Non-Access Stratum, NAS) signaling to the CP group function for bearing mapping processing, the CP group function calls the physical layer/layer-1 function to map an air interface resource, which is sent to the UE, and the like.

In this embodiment, the radio access network system further includes an RAN user plane control function, the user plane control function is connected to the UPF, and the UPF is also connected to the core network function: the SMF.

For description of other radio access network functions in this embodiment, please refer to the description of Embodiment 1, and to avoid repetition, details are not described herein again.

The embodiments of this application are described above with reference to the accompanying drawings. However, this application is not limited to the foregoing specific implementations. The foregoing specific implementations are merely illustrative instead of restrictive. Under the enlightenment of this application, a person of ordinary skill in the art may make many forms without departing from the essence of this application and the protection scope of claims, all of which fall within the protection of this application.

## Claims

1. A radio access network system, comprising:
a plurality of radio access network functions, wherein the plurality of radio access network functions are connected to each other through a radio access network service-based architecture SBA bus, and any one of the plurality of radio access network functions can call a service provided by another radio access network function through the radio access network SBA bus.

2. The system according to claim 1, wherein the plurality of radio access network functions comprise at least two of the following:
a first radio access network function, used to provide at least one of the following services: a radio resource control RRC configuration, paging terminal, mobility management, and RRC state management;
a second radio access network function, used to provide at least one of the following services: data encryption, data integrity protection, and ensuring integrity of switching data;
a third radio access network function, used to provide at least one of the following services: segmentation or merging of data packets, and hybrid automatic repeat request HARQ transmission of data packets;
a fourth radio access network function, used to provide the following service: mapping of an air interface sending resource of data;
a fifth radio access network function, used to provide at least one of the following services: providing terminal radio context information; and establishing and updating the terminal radio context information;
a sixth radio access network function, used to provide the following service: providing terminal radio security context; and
a seventh radio access network function, used to provide at least one of the following services: a user plane control function, quality of service QoS information reporting, and user plane information statistical feedback.

3. The system according to claim 2, wherein the plurality of radio access network functions further comprise an eighth radio access network function, used to provide the following service: ensuring that data is sent correctly.

4. The system according to claim 2, wherein the plurality of radio access network functions comprise the seventh radio access network function, and the seventh radio access network function is connected to a user plane function.

5. The system according to claim 1, wherein at least one of the plurality of radio access network functions is connected to a core network SBA bus.

6. The system according to claim 5, wherein
a radio access network function in the radio access network system can access the core network SBAbus when calling a service of a core network function, wherein the core network function is connected to the core network SBA bus.

7. The system according to claim 1, wherein the radio access network SBA bus is connected to a core network function, and the core network function is connected to a core network SBA bus.

8. The system according to claim 7, wherein
the core network function can access the radio access network SBA bus when calling a service of a radio access network function in the radio access network system.

9. The system according to claim 7, wherein the core network function comprises at least one of the following:
an access and mobility management function AMF;
a network data analytics function NWDAF;
a session management function SMF; and
an authentication server function AUSF.
